# EUROPEAN PATENT APPLICATION

(11) **EP 4 583 264 A1**
(43) Date of publication of application: **09.07.2025**
(21) Application number: 23860845.9
(22) Date of filing: 29.08.2023
(51) Int. Cl.: H01M 50/105, B29C 51/10

(54) **POUCH-TYPE BATTERY CASE, MANUFACTURING METHOD THEREFOR, AND SECONDARY BATTERY MANUFACTURING METHOD**

(30) Priority: 29.08.2022 KR 20220108708
(71) Applicant: LG Energy Solution, Ltd., Seoul 07335 (KR)
(72) Inventor: CHO, Sung Woo, Daejeon 34122 (KR); KANG, Tae Won, Daejeon 34122 (KR); HONG, Jeong Woo, Daejeon 34122 (KR); LEE, Chung Hee, Daejeon 34122 (KR)
(74) Representative: Goddar, Heinz J.
(86) International application number: PCT/KR2023/012803
(87) International publication number: WO 2024/049169

(57) **Abstract**

A pouch-type battery case according to an embodiment of the present invention may include: a cup part having a recessed shape; and a gas pocket part disposed at one side of the cup part and having a recessed shape. A wrinkle part, which is folded or unfolded depending on an internal pressure of the gas pocket part so that a depth of the gas pocket part varies, may be formed on a circumferential portion of the gas pocket part. The wrinkle part may include: a convex portion protruding toward the outside of the gas pocket part; and a concave portion which is alternately disposed with the convex portion in a depth direction of the gas pocket part. A remaining thickness of the convex portion may be less than a remaining thickness of the concave portion.

## Description

### TECHNICAL FIELD

### CROSS-REFERENCE TO RELATED APPLICATION

The present application claims the benefit of the priority of Korean Patent Application No. 10-2022-0108708, filed on August 29, 2022, which is hereby incorporated by reference in its entirety.

### TECHNICAL FIELD

The present invention relates to a pouch-type battery case, a method of manufacturing the same, and a method of manufacturing a secondary battery using the pouch-type battery case.

### BACKGROUND ART

In general, secondary batteries are chargeable and dischargeable unlike primary batteries that are not chargeable and are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density per unit weight, a degree of its utilization is rapidly increasing.

Secondary batteries may be classified by types of battery case, and representative examples of the secondary batteries may include can-type secondary batteries including cylindrical or prismatic battery cases, and pouch-type secondary batteries including pouch-type battery cases.

Such a pouch-type battery case may be provided with a cup part that accommodates an electrode assembly and a gas pocket part that collects a gas. The gas pocket part may be drawn and molded using a forming device, like the cup part in which the electrode assembly is accommodated.

In more detail, a method of manufacturing the pouch-type secondary battery may include a process of sealing a portion of the pouch-type battery case in a state in which the electrode assembly is accommodated in the cup part, a process of injecting an electrolyte through a non-sealed opening of the pouch-type battery case, and a process of activating the electrode assembly through charging and discharging. In addition, a gas generated in the activation process may be collected in the gas pocket part.

In order to prevent an unnecessary gas or air from remaining in the pouch-type battery case, the process of sealing the opening may be generally performed in a negative pressure chamber (e.g., a vacuum chamber).

However, unlike the cup part in which the electrode assembly is accommodated, the gas pocket part may not be maintained in its shape and may be crushed or deformed due to the negative pressure. When the gas pocket part is distorted or deformed, since a volume of the gas pocket part decreases, there is a problem in that a gas is not sufficiently collected, and thus, improvement is required.

### DISCLOSURE OF THE INVENTION

### TECHNICAL PROBLEM

One object of the present invention for solving the above problem is to provide a pouch-type battery case that is capable of preventing a gas pocket part from being crushed by a wrinkle part disposed on a gas pocket part and sufficiently collecting a large amount of gas, and a method for manufacturing the same.

Another object of the present invention is to provide a method for manufacturing a secondary battery including the pouch-type battery case.

### TECHNICAL SOLUTION

A pouch-type battery case according to an embodiment of the present invention may include: a cup part having a recessed shape; and a gas pocket part disposed at one side of the cup part and having a recessed shape. A wrinkle part, which is folded or unfolded depending on an internal pressure of the gas pocket part so that a depth of the gas pocket part varies, may be formed on a circumferential portion of the gas pocket part. The wrinkle part may include: a convex portion protruding toward the outside of the gas pocket part; and a concave portion which is alternately disposed with the convex portion in a depth direction of the gas pocket part. A remaining thickness of the convex portion may be less than a remaining thickness of the concave portion.

A depth of the gas pocket part may vary between a contracted depth and an expanded depth that is greater than the contracted depth, and wherein the expanded depth may be 0.7 times to 1.3 times a depth of the cup part.

A depth of the gas pocket part may vary between a contracted depth and an expanded depth that is greater than the contracted depth, and wherein the expanded depth may be 12 times or more than the contracted depth.

A method for manufacturing a pouch-type battery case according to an embodiment of the present invention may include: molding a cup part and a gas pocket part in a pouch sheet; and molding a wrinkle part, which is folded or unfolded depending on an internal pressure of the gas pocket part so that a depth of the gas pocket part varies, on a circumferential portion of the gas pocket part. The wrinkle part may include: a convex portion protruding toward the outside of the gas pocket part; and a concave portion which is alternately disposed with the convex portion in a depth direction of the gas pocket part. A remaining thickness of the convex portion may be less than a remaining thickness of the concave portion.

The gas pocket part, on which the wrinkle part is molded, may have an initial depth, and the depth of the gas pocket part may vary between a contracted depth, which is less than the initial depth, and an expanded depth, which is greater than the initial depth.

The contracted depth may be 0.1 times or less than the initial depth.

The expanded depth may be 1.2 times to 1.3 times the initial depth.

A device for molding the wrinkle part may include: a plurality of support parts that are in contact with an outer circumference of the gas pocket part and disposed at predetermined intervals in a depth direction of the gas pocket part; and a negative pressure part configured to apply a negative pressure to the outer circumference of the gas pocket part through gaps between the plurality of support parts.

A method for manufacturing a secondary battery according to an embodiment of the present invention may include: preparing a pouch-type battery case; accommodating an electrode assembly and an electrolyte in a cup part of the pouch-type battery case; sealing the pouch-type battery case within a negative pressure chamber; and collecting a gas generated by charging and discharging the electrode assembly into a gas pocket part of the pouch-type battery case. The preparing of the pouch-type battery case may include: molding the cup part and the gas pocket part in a pouch sheet; and molding a wrinkle part, which is folded or unfolded depending on an internal pressure of the gas pocket part so that a depth of the gas pocket part varies, on a circumferential portion of the gas pocket part. The wrinkle part may include: a convex portion protruding toward the outside of the gas pocket part; and a concave portion which is alternately disposed with the convex portion in a depth direction of the gas pocket part. A remaining thickness of the convex portion may be less than a remaining thickness of the concave portion.

In the preparing of the pouch-type battery case, the gas pocket part may be molded to an initial depth, and in the sealing of the pouch-type battery case, the depth of the gas pocket part may vary to a contracted depth less than the initial depth.

In the collecting of the gas into the gas pocket part, the depth of the gas pocket part may vary to an expanded depth greater than the initial depth.

### ADVANTAGEOUS EFFECTS

According to the preferred embodiment of the present invention, even if the negative pressure is applied to the gas pocket part when sealing the pouch-type battery case, the wrinkle part may be contracted, and the depth of the gas pocket part may be reduced. Therefore, the gas pocket part may be prevented from being crushed.

In addition, when the gas is collected within the gas pocket part, the internal pressure of the gas pocket part may increase, and thus, the wrinkle part may be expanded, and the depth of the gas pocket part may increase. As a result, the gas pocket part may stably collect the sufficiently large amount of gas.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is an assembly view illustrating a pouch-type battery case and an electrode assembly accommodated therein according to an embodiment of the present invention.
FIG. 2 is a perspective view illustrating a state when viewing the pouch-type battery case in another direction according to an embodiment of the present invention.
FIG. 3 is a side view of the pouch-type battery case according to an embodiment of the present invention.
FIG. 4 is a view illustrating a state in which a gas pocket part of FIG. 3 is contracted.
FIG. 5 is a view illustrating a state in which the gas pocket part of FIG. 3 is expanded.
FIG. 6 is a schematic view illustrating a device for molding a wrinkle part according to an embodiment of the present invention.
FIG. 7 is a flowchart illustrating a method for manufacturing a secondary battery according to another embodiment of the present invention.
FIGS. 8a to 8d are schematic views sequentially illustrating a method for manufacturing a secondary battery according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

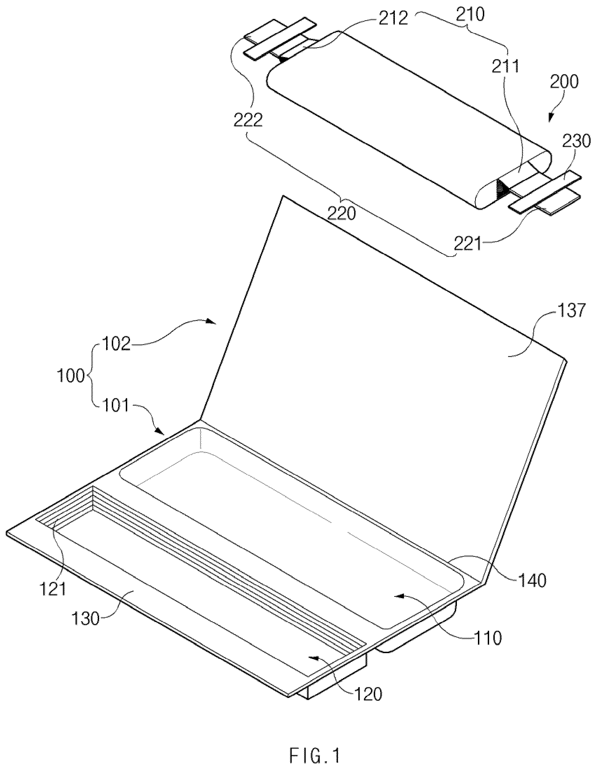

FIG. 1 is an assembly view illustrating a pouch-type battery case and an electrode assembly accommodated therein according to an embodiment of the present invention.

A pouch-type battery case 100 (hereinafter, referred to as a 'battery case') according to an embodiment of the present invention may be manufactured by molding a pouch sheet 137. The pouch sheet 137 may be a sheet-type member in which a plurality of layers are laminated. For example, the pouch sheet 137 may include a first resin layer (e.g., polypropylene material) that defines one surface thereof, a second resin layer (e.g., polyethylene terephthalate material) that defines the other surface thereof, and a metal layer (for example, made of aluminum) disposed between the first resin layer and the second resin layer. The pouch sheet 137 may have flexibility and moldability.

The battery case 100 may include a cup part 110 having a recessed shape and a gas pocket part 120 disposed at one side of the cup part 110 and having a recessed shape. The battery case 100 may further include a terrace 130 disposed around the cup part 110 and the gas pocket part 120.

In more detail, the battery case 100 may include a first case 101 and a second case 102. Hereinafter, as illustrated in FIG. 1, a case in which the first case 101 and the second case 102 are integrally connected to each other will be described as an example. The first case 101 and the second case 102 may be partitioned by a folding part 140. When the folding part 140 is folded, the first case 101 and the second case 102 may face each other. However, it is not limited thereto, and it is also possible to separately manufacture the first case 101 and the second case 102 so that the first case 101 and the second case 102 are separated from each other.

At least one of the first case 101 and the second case 102 may include the cup part 110. In addition, at least one of the first case 101 and the second case 102 may include the gas pocket part 120. Hereinafter, as illustrated in FIG. 1, a case in which the first case 101 includes the cup part 110 and the gas pocket part 120, and the second case 102 does not include the cup part 110 and the gas pocket part 120 will be described as an example. Those skilled in the art will be able to easily understand an embodiment in which each of the first case 101 and the second case 102 includes the cup part 110 and the gas pocket part 120.

The cup part 110 may be recessed from the terrace 130 by a predetermined depth to define a space in which the electrode assembly 200 is accommodated. After accommodating the electrode assembly 200 in the cup part 110, the folding part 140 may be folded. As a result, the second case 102 may cover the electrode assembly 200 accommodated in the cup part 110. Thus, the electrode assembly 200 may be accommodated within the cup part 110.

The gas pocket part 120 may be recessed in the same direction as the cup part 110. The gas pocket part 120 may define a space in which a gas is collected.

The gas pocket part 120 may be disposed at one side of the cup part 110. In more detail, the gas pocket part 120 may be disposed at an opposite side of the folding part 140 with respect to the cup part.

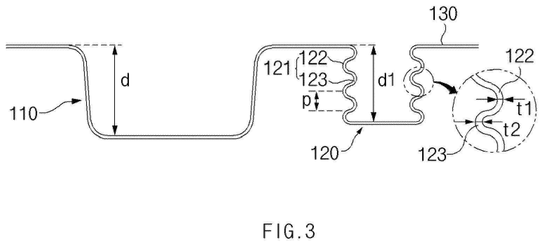

A wrinkle part 121, that is folded or unfolded depending on the internal pressure of the gas pocket part 120 so that a depth of the gas pocket part 120 is variable, may be formed on a circumferential portion of the gas pocket part 120. The wrinkle part 121 may have a bellows shape. In more detail, the wrinkle part 121 may be provided by repeatedly forming a convex portion 122 (see FIG. 3) and a concave portion 123 in a depth direction of the gas pocket part 120.

The electrode assembly 200 may be provided with a separator interposed between a plurality of electrodes. For example, the electrode assembly 200 may be a simple stack type in which a plurality of electrodes and separators are alternately stacked or a lamination & stack type in which unit cells, in which electrodes and separators are laminated, are stacked. However, this embodiment is not limited thereto, and the electrode assembly 200 may have a jelly-roll type in which an electrode sheet and a separator sheet are wound together, a stack & folding type in which a separator sheet in which unit cells are stacked is folded, or a z-folding type in which a separator sheet in which a plurality of electrodes are stacked is folded in a zigzag shape.

The electrode assembly 200 may be provided with an electrode tab 210. The electrode tab 210 may protrude outward from the electrode of the electrode assembly 200. In more detail, a plurality of positive electrode tabs 211 connected to a plurality of positive electrodes and a plurality of negative electrode tabs 212 connected to a plurality of negative electrodes may protrude in different directions (e.g., opposite directions) with respect to the electrode assembly 200. However, it is not limited thereto, and it is possible to allow the positive electrode tab 211 and the negative electrode tab 212 to protrude in directions parallel to each other.

An electrode lead 220 may be connected to the plurality of electrode tabs 210. In more detail, the positive electrode lead 221 may be connected to the plurality of positive electrode tabs 211, and the negative electrode lead 222 may be connected to the plurality of negative electrode tabs 212.

The electrode lead 220 may have one end connected to the plurality of electrode tabs 210 and the other end protruding to the outside of the battery case 100.

A portion of the electrode lead 220 may be surrounded by an insulating part 230. For example, the insulating part 230 may include an insulating tape. When the electrode assembly 200 is accommodated in the cup part 110, the insulating part 230 may be disposed to correspond to the terrace 130 of the battery case 100. When sealing the battery case 100, the insulating part 230 may be thermally fused to the terrace 130. Thus, the insulating part 230 may insulate the electrode lead 220 from the battery case 100 to maintain the sealing of the battery case 100.

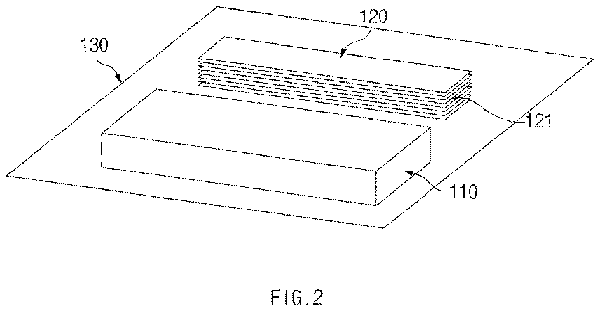

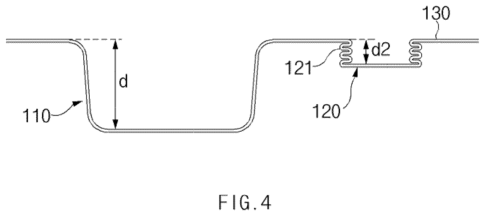

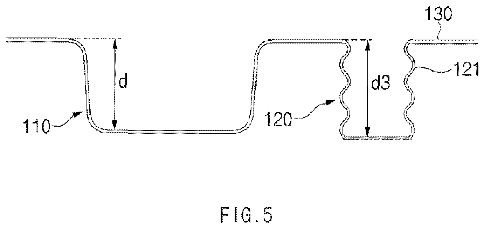

FIG. 2 is a perspective view illustrating a state when viewing the pouch-type battery case in another direction according to an embodiment of the present invention, FIG. 3 is a side view of the pouch-type battery case according to an embodiment of the present invention, FIG. 4 is a view illustrating a state in which the gas pocket part of FIG. 3 is contracted, and FIG. 5 is a view illustrating a state in which the gas pocket part of FIG. 3 is expanded.

For convenience of explanation, the first case 101 illustrated in FIG. 1 is illustrated in FIGS. 2 to 5.

The depth of the gas pocket part 120 may vary by the wrinkle part 121 disposed on the gas pocket part 120.

As described above, the wrinkle part 121 may have a bellows shape. In more detail, the wrinkle part 121 may include a convex portion 122 that protrudes toward the outside of the gas pocket part 120 and a concave portion 123 disposed alternately with the convex portions 122 in the depth direction of the gas pocket part 120.

The convex portion 122 may be formed to be convex toward the outside of the gas pocket part 120. The concave portion 123 may be provided concavely toward the inside of the gas pocket part 120.

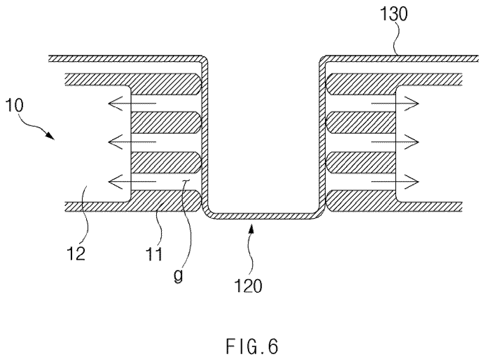

A remaining thickness t1 of the convex part 122 may be less than a remaining thickness t2 of the concave part 123. In more detail, the remaining thickness t1 of the outermost part of the convex part 122 may be less than the remaining thickness t2 of the innermost part of the concave part 123. This may be a characteristic that appears when a negative pressure is applied to the outside of the circumferential portion of the gas pocket part 120 to mold the wrinkle part 121. This will be described in detail later with reference to FIG. 6.

The gas pocket part 120 may be molded at an initial depth d1. The initial depth d1 may be less than the depth d of the cup part 110. The initial depth d1 may refer to a depth after the wrinkle part 121 are formed in the gas pocket part 120.

The depth of the gas pocket part 120 may vary by the wrinkle part 121. In more detail, when the wrinkle part 121 is contracted, the depth of the gas pocket part 120 may decrease. The contraction of the wrinkle part 121 may mean that a pitch p between the plurality of convex portions 122 decreases. On the other hand, when the wrinkle part 121 is expanded, the depth of the gas pocket part 120 may increase. The expansion of the wrinkle part 121 may mean that the pitch p between the plurality of convex portions 122 increases.

The depth of the gas pocket part 120 may vary between a contracted depth d2 and an expanded depth d3. A range in which the depth of the gas pocket part 120 is variable may be within a range in which the wrinkle part 121 is not excessively deformed, and the function of the wrinkle part 121 is maintained.

As illustrated in FIG. 4, when the wrinkle part 121 is maximally contracted, the gas pocket part 120 may have the contracted depth d2. For example, when sealing the battery case 100 in the negative pressure chamber, the wrinkle part 121 may be contracted so that the gas pocket part 120 has the contracted depth d2.

The contracted depth d2 may be less than the initial depth d1. In more detail, the contracted depth d2 may be 0.1 times or less than the initial depth d1. If the contracted depth d2 is greater than 0.1 times the initial depth d1, the wrinkle part 121 may not be sufficiently deformed, and the gas pocket part 120 may be crushed when sealing the battery case 100 in the negative pressure chamber.

As illustrated in FIG. 5, when the wrinkle part 121 are maximally expanded, the gas pocket part 120 may have the expanded depth d3. For example, during an activation process of charging and discharging the electrode assembly 200 in the state in which the battery case 100 is sealed, the wrinkle part 121 may be expanded due to the internal pressure of a gas generated by the activation process, so that the gas pocket part 120 have the expanded depth d3.

The expanded depth d3 may be greater than the contracted depth d1. The expanded depth d3 may be greater than the initial depth d1. In more detail, the expanded depth d3 may be 1.2 times to 1.3 times the initial depth d1. That is, the expanded depth d3 may be 12 times or more than the contracted depth d2. If the expanded depth d3 is less than 1.2 times the initial depth d1, there is a risk that the wrinkle part 121 is not sufficiently deformed, and the gas is not sufficiently collected in the gas pocket part 120. On the other hand, if the expanded depth d3 is greater than 1.3 times the initial depth d1, cracks may occur due to excessive elongation of the circumferential portion of the gas pocket part 120 when molding the wrinkle part 121, or the gas pocket part 120 may be ruptured by the internal pressure of the collected gas.

In addition, the expanded depth d3 of the gas pocket part 120 may be 0.7 times to 1.3 times the depth d of the cup part 110. If the expanded depth d3 is less than 0.7 times the depth d of the cup part 110, there is a risk that gas is not sufficiently collected in the gas pocket part 120. Conversely, if the expanded depth d3 is greater than 1.3 times the depth d of the cup part 110, a volume of the gas pocket part 120 may be unnecessarily large, and when molding the gas pocket part 120, the pouch sheet 137 may be excessively elongated to cause the cracks.

Thus, the wrinkle part 121 may prevent the gas pocket part 120 from being crushed by the negative pressure and may increase an amount of gas collected by the gas pocket part 120 to improve stability in the activation process.

FIG. 6 is a schematic view illustrating a device for molding a wrinkle part according to an embodiment of the present invention.

FIG. 6 illustrates the gas pocket part 120 before the wrinkle part 121 (see FIG. 3) is formed. A device 10 for molding the wrinkle part 121 on the circumferential portion of the gas pocket part 120 (hereinafter, referred to as a wrinkle molding device) may apply a negative pressure to the outside of the circumferential portion of the gas pocket part 120 to mold the wrinkle part 121.

In more detail, the wrinkle molding device 10 may include a plurality of support parts 11 that are in contact with an outer circumference of the gas pocket part 120 and disposed at a predetermined interval in the depth direction of the gas pocket part 120, and a negative pressure part 12 that applies a negative pressure to the outer circumference of the gas pocket part 120 through a gap g between the plurality of support parts 11.

Each of the plurality of support parts 11 may surround the outer circumference of the gas pocket part 120. The plurality of support parts 11 may be in contact with the outer circumference of the gas pocket part 120 at predetermined intervals in the depth direction of the gas pocket part 120. When the negative pressure part 12 applies a negative pressure to the outer circumference of the gas pocket part 120, each of the plurality of support parts 11 may support the outer circumference of the gas pocket part 120.

In order to prevent the cracks from occurring in the gas pocket part 120, an inner end of the support part 122 may be formed to be rounded.

The negative pressure part 12 may apply the negative pressure to the outer circumference of the gas pocket part 120 through the gap g between the plurality of support parts 11. For example, as illustrated in FIG. 6, the plurality of gaps g may communicate with a negative pressure chamber, and the negative pressure part 12 may apply the negative pressure to the negative pressure chamber. For example, the negative pressure part 12 may include a negative pressure pump.

Thus, a portion of the circumferential portion of the gas pocket part 120, which faces the gap g, may be elongated outward by the negative pressure. The portion of the circumferential portion of the gas pocket part 120, which faces the gap g, may be elongated and molded into the convex portion 122 (see FIG. 3), and the portion that is in contact with the support part 11 may form the concave portion 123.

As described above, since a portion of the circumferential portion of the gas pocket part 120 is elongated outward and molded into the convex portion 122, as illustrated in FIG. 3, the remaining thickness t1 of the convex portion 122 may be less than the remaining thickness t2 of the concave portion 123.

The wrinkle part 122 may be easily and quickly molded by the wrinkle molding device 10.

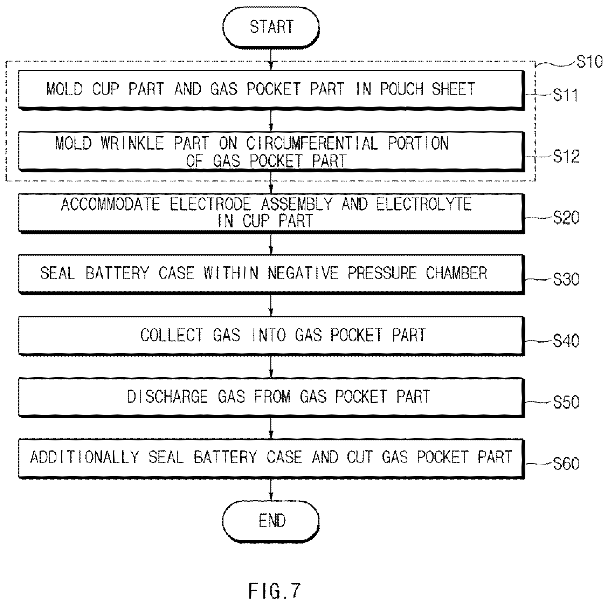

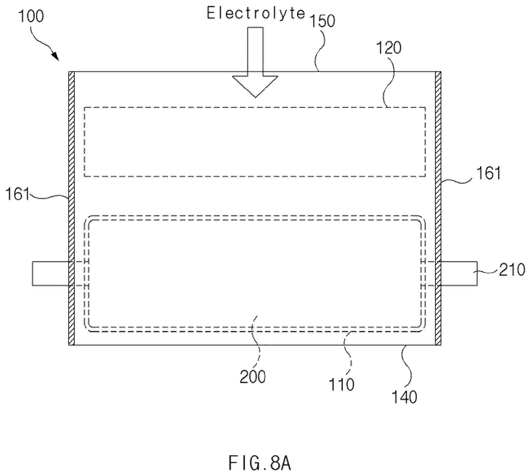

FIG. 7 is a flowchart illustrating a method for manufacturing a secondary battery according to another embodiment of the present invention, and FIGS. 8a to 8d are schematic views sequentially illustrating a method for manufacturing a secondary battery according to another embodiment of the present invention.

A method for manufacturing a secondary battery according to another embodiment of the present invention may be a method for manufacturing a secondary battery including the above-described battery case 100.

The method for manufacturing the secondary battery may include a process (S10) of preparing a battery case 100 (hereinafter, referred to as a 'case preparation process'), a process (S20) of accommodating an electrode assembly 200 and an electrolyte in a cup part 110 (hereinafter, referred to as an 'accommodation process'), a process (S30) of sealing a battery case 100 within a negative pressure chamber (hereinafter, referred to as a 'sealing process'), and a process (S40) of collecting a gas generated by charging and discharging of the electrode assembly 200 into the gas pocket part 120 (hereinafter, referred to as a 'gas collection process').

The case preparation process (S10) may be named a 'method for manufacturing a pouch-type battery case', and may itself constitute another embodiment of the present invention.

In more detail, the case preparation process (S10) may include a process (S11) of molding the cup part 110 and the gas pocket part 120 in the pouch sheet 137 (hereinafter, referred to as a 'first molding process'), and a process (S12) of molding a wrinkle part 121, which is folded or unfolded depending on an internal pressure of the gas pocket part 120 so that a depth of the gas pocket part 120 is variable, on a circumferential portion of the gas pocket part 120 (hereinafter, referred to as a 'second molding process').

In the first molding process (S11), each of the cup part 110 and the gas pocket part 120 may be molded into the pouch sheet 137 to have an recessed shape. For example, the cup part 110 and the gas pocket part 120 may be drawn to be molded. The gas pocket part 120 and the cup part 110 may be formed simultaneously or may be formed sequentially according to a preset order.

In the second molding process (S12), the wrinkle molding device 10 (see FIG. 6) may apply a negative pressure to an outer circumference of the gas pocket part 120 to mold the wrinkle part 121. Since this has been explained previously, detailed contents will be omitted.

The gas pocket part 120 in which the wrinkle part 121 is formed may have an initial depth d1. That is, in the case preparation process (S10), the gas pocket part 120 may be molded to the initial depth d1.

In the accommodation process (S20), a folding part 140 may be folded in the state in which the electrode assembly 200 is accommodated in the cup part 110, so that the first case 101 and the second case 102 face each other.

Thereafter, as illustrated in FIG. 8a, some of portions at which a terrace 130 of the first case 101 and the second case 102 are in contact with each other may be thermally fused to form a first sealing part 161. In a state in which the folding part 140 is directed to face downward, the first sealing part 161 may be formed along both edges of the battery case 100. In addition, an edge opposite to the folding part 140 of each of the first case 101 and the second case 102 may be unsealed to form an opening 150.

Thereafter, an electrolyte may be injected through the opening 150. The electrolyte may be introduced into the cup part 110 to impregnate the electrode assembly 200.

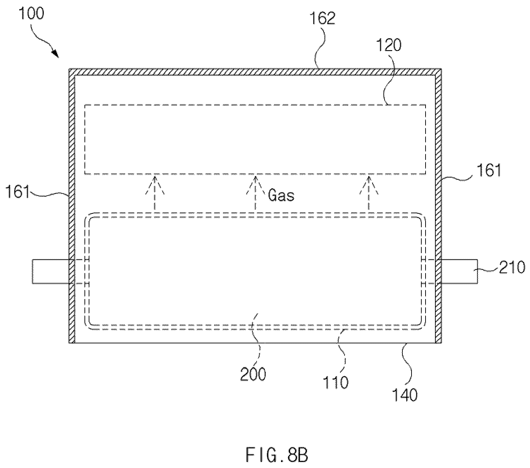

In the sealing process (S30), as illustrated in FIG. 8b, the opening 150 may be sealed to form a second sealing part 162 connected to the previously formed first sealing part 161. As a result, the battery case 100 may be completely sealed.

The sealing process (S30) may be performed in a state in which the battery case 100 is disposed in a negative pressure chamber (not shown) (e.g., a vacuum chamber). As a result, the battery case 100 may be sealed in a state in which any gas or air remaining in the battery case 100 is removed.

In the sealing process (S30), a depth of the gas pocket part 120 may vary to a contracted depth d2 (see FIG. 4) that is less than an initial depth d1. That is, as the negative pressure is applied within the gas pocket part 120 by the negative pressure chamber, the wrinkle part 121 may be contracted, and thus, the depth of the gas pocket part 120 may gradually decrease. As a result, the gas pocket part 120 may be prevented from being crushed.

As described above, the contracted depth d2 may be 0.1 times or less than the initial depth d1.

After the battery case 100 is sealed, the electrode assembly 200 may be activated by charging and discharging the electrode assembly 200 through an electrode lead 210 protruding to the outside of the battery case 100.

In the gas collection process (S40), as illustrated in FIG. 8b, a gas generated by the activation of the electrode assembly 200 may be collected in the gas pocket part 120.

In the gas collection process (S40), the depth of the gas pocket part 120 may vary to an expanded depth d3 that is greater than the initial depth d1. That is, as the internal pressure of the gas pocket part 120 increases due to the collected gas, the wrinkle part 121 may be expanded, and the depth of the gas pocket part 120 may increase. As a result, the gas pocket part 120 may stably collect a sufficiently large amount of gas.

As described above, the expanded depth d3 may be 1.2 times to 1.3 times the initial depth d1.

The method for manufacturing the secondary battery may further include a process (S50) of discharging the gas from the gas pocket part 120 (hereinafter, referred to as a 'degassing process'), and a process of additionally sealing the battery case 100 and cutting the gas pocket part 120 (hereinafter, referred to as a 'cutting process').

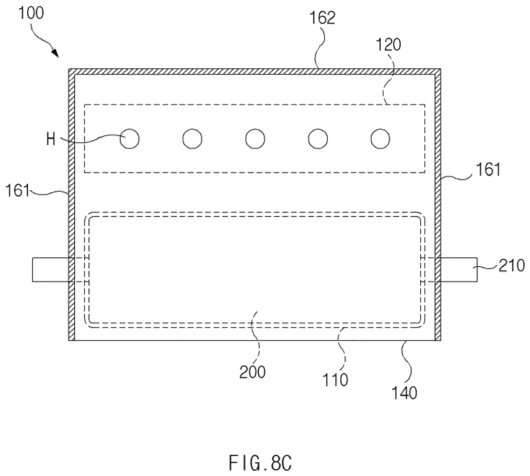

In the degassing process (S50), as illustrated in FIG. 8c, at least one hole H may be formed by punching the gas pocket part 120 or the portion covering the gas pocket part 120, and the gas in the battery case 100 may be discharged through the hole H.

The degassing process (S50) may be performed in a state in which the battery case 100 is disposed in a negative pressure chamber (not shown) (e.g., a vacuum chamber). Thus, the gas in the battery case 100, especially the gas pocket part 120, may be quickly discharged through the hole H.

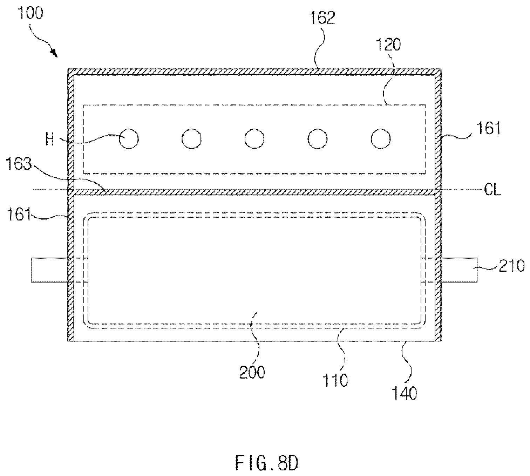

In the cutting process (S60), as illustrated in FIG. 8d, a portion between the cup part 110 and the gas pocket part 120 may be sealed to form a third sealing part 163. Both ends of the third sealing part 163 may be connected to the first sealing part 161.

Thereafter, the battery case 100 may be cut along a virtual cutting line CL disposed on the third sealing part 163 or outside the third sealing part 163. As a result, a portion of the battery case 100 including the gas pocket part 120 may be removed.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

| | | | |
|---|---|---|---|
| 10: | Wrinkle molding device | 11: | Support part |
| 12: | Negative pressure part | 100: | Pouch-type battery case |
| 101: | First case | 102: | Second case |
| 110: | Cup part | 120: | Gas pocket part |
| 121: | Wrinkle part | 122: | Convex portion |
| 123: | Concave portion | 130: | Terrace |
| 140: | Folding part | 200: | Electrode assembly |

## Claims

1. A pouch-type battery case comprising:
a cup part having a recessed shape; and
a gas pocket part disposed at one side of the cup part and having a recessed shape,
wherein a wrinkle part, which is folded or unfolded depending on an internal pressure of the gas pocket part so that a depth of the gas pocket part varies, is formed on a circumferential portion of the gas pocket part,
wherein the wrinkle part comprises:
a convex portion protruding toward the outside of the gas pocket part; and
a concave portion which is alternately disposed with the convex portion in a depth direction of the gas pocket part,
wherein a remaining thickness of the convex portion is less than a remaining thickness of the concave portion.

2. The pouch-type battery case of claim 1, wherein a depth of the gas pocket part varies between a contracted depth and an expanded depth that is greater than the contracted depth, and
wherein the expanded depth is 0.7 times to 1.3 times a depth of the cup part.

3. The pouch-type battery case of claim 1, wherein a depth of the gas pocket part varies between a contracted depth and an expanded depth that is greater than the contracted depth, and
wherein the expanded depth is 12 times or more than the contracted depth.

4. A method for manufacturing a pouch-type battery case, the method comprising:
molding a cup part and a gas pocket part in a pouch sheet; and
molding a wrinkle part, which is folded or unfolded depending on an internal pressure of the gas pocket part so that a depth of the gas pocket part varies, on a circumferential portion of the gas pocket part,
wherein the wrinkle part comprises:
a convex portion protruding toward the outside of the gas pocket part; and
a concave portion which is alternately disposed with the convex portion in a depth direction of the gas pocket part,
wherein a remaining thickness of the convex portion is less than a remaining thickness of the concave portion.

5. The method of claim 4, wherein the gas pocket part, on which the wrinkle part is molded, has an initial depth, and
the depth of the gas pocket part varies between a contracted depth, which is less than the initial depth, and an expanded depth, which is greater than the initial depth.

6. The method of claim 5, wherein the contracted depth is 0.1 times or less than the initial depth.

7. The method of claim 5, wherein the expanded depth is 1.2 times to 1.3 times the initial depth.

8. The method of claim 4, wherein a device for molding the wrinkle part comprises:
a plurality of support parts that are in contact with an outer circumference of the gas pocket part and disposed at predetermined intervals in a depth direction of the gas pocket part; and
a negative pressure part configured to apply a negative pressure to the outer circumference of the gas pocket part through gaps between the plurality of support parts.

9. A method for manufacturing a secondary battery, the method comprising:
preparing a pouch-type battery case;
accommodating an electrode assembly and an electrolyte in a cup part of the pouch-type battery case;
sealing the pouch-type battery case within a negative pressure chamber; and
collecting a gas generated by charging and discharging of the electrode assembly into a gas pocket part of the pouch-type battery case,
wherein the preparing of the pouch-type battery case comprises:
molding the cup part and the gas pocket part in a pouch sheet; and
molding a wrinkle part, which is folded or unfolded depending on an internal pressure of the gas pocket part so that a depth of the gas pocket part varies, on a circumferential portion of the gas pocket part,
wherein the wrinkle part comprises:
a convex portion protruding toward the outside of the gas pocket part; and
a concave portion which is alternately disposed with the convex portion in a depth direction of the gas pocket part,
wherein a remaining thickness of the convex portion is less than a remaining thickness of the concave portion.

10. The method of claim 9, wherein, in the preparing of the pouch-type battery case, the gas pocket part is molded to an initial depth, and
in the sealing of the pouch-type battery case, the depth of the gas pocket part varies to a contracted depth less than the initial depth.

11. The method of claim 10, wherein, in the collecting of the gas into the gas pocket part, the depth of the gas pocket part varies to an expanded depth greater than the initial depth.
